# EUROPEAN PATENT APPLICATION

(11) **EP 4 650 858 A1**
(43) Date of publication of application: **19.11.2025**
(21) Application number: 25176500.4
(22) Date of filing: 14.05.2025
(51) Int. Cl.: G02B 30/56

(54) **HOLOGRAPHIC CHARACTER CREATION**

(30) Priority: 16.05.2024 US 202418666317
(71) Applicant: Disney Enterprises, Inc., Burbank, CA 91521 (US)
(72) Inventor: Joseph, Daniel Mark, Windermere (US); Klouda, Jessica Anne, Winter Garden (US); Monahan, Jason William, Celebration (US)
(74) Representative: Jarrett, Daniel Phillip

(57) **Abstract**

A system (100) includes an image plane (108), a scrim layer (110), and a lens stack (106) positioned between the image plane and the scrim layer. The lens stack (106) is positioned at a first distance from the image plane (108) to create a perceived image (102) at a second distance away from the lens stack (106). The first and second distances may be equal. The image source (108) is spaced away from the lens stack (106) and on a first side (124) of the lens stack (106). The scrim layer (110) is positioned on a second side (126) of the lens stack (106). The lens stack (106) includes a pair of lenses (e.g., identical Fresnel lenses) stacked facing each other. A bounce mirror (500) positioned between the image plane (108) and the lens stack (106) may fold an optical path from the image plane to the lens stack. Additional systems and associated methods are also disclosed.

## Description

### FIELD

The present application relates to systems and methods for creating two-dimensional (2D) or three-dimensional (3D) holography, such as 2D or 3D holographic characters or holograms.

### BACKGROUND

Rides or attractions often attempt to bring characters from the screen (e.g., animation, movies, television, video game, etc.) into the real world. Some solutions use animatronics or other physical models placed physically in the environment, such as near a ride vehicle or track. However, the animatronic or physical model must be moved or positioned such that contact with the physical animatronic or model is prevented. For example, careful controls must exist to prevent undesired contact of a person or ride vehicle with the physical animatronic or model. Such systems may require a lot of space, a large facility input, and a high expense. An animated figure may also require large and/or complicated infrastructure and safety systems to prevent undesired contact.

Therefore a need exists for systems and methods of creating a holographic character (e.g., hologram), such as to optically place a 2D or 3D character in the real world environment, that addresses the concerns above or at least offers an alternative to existing solutions.

### BRIEF SUMMARY

Aspects and features of the present disclosure are set out in the appended claims.

### OVERVIEW OF DISCLOSURE

In one example, a system include an image plane having a generated image, a scrim layer, and a lens stack positioned between the image plane and the scrim layer. The lens stack may be positioned at a first distance from the image plane and configured to create, at a second distance away from the lens stack, a perceived image of the generated image.

Optionally, the lens stack includes a pair of Fresnel lenses stacked facing each other. Each Fresnel lens of the pair of Fresnel lenses may be a plano-convex Fresnel lens. Each Fresnel lens of the pair of Fresnel lenses may be a spot Fresnel lens.

Optionally, the system includes a neutral density filter positioned between the scrim layer and the lens stack.

Optionally, the scrim layer includes a sheer material.

Optionally, the second distance is equal to the first distance.

In another example, a system includes a lens stack including a first side and a second side opposite the first side, an image source spaced away from the lens stack and on the first side of the lens stack and configured to generate an image, and a scrim layer positioned on the second side of the lens stack. The lens stack and scrim layer may create a perceived image based on the image and on the second side of the lens stack.

Optionally, the system includes a bounce mirror between the image source and the lens stack to fold an optical path from the image source to the lens stack.

Optionally, the lens stack includes a first Fresnel lens and a second Fresnel lens. The first and second lenses may be identical lenses stacked facing each other.

Optionally, the image source is a liquid-crystal display or a light-emitting diode display.

Optionally, the image source defines an image plane at a distance away from the lens stack on the first side. The perceived image may be created at the distance away from the lens stack on the second side.

Optionally, the system is configured to create the perceived image in a bright environment.

In another example, a system includes a lens stack including a first side and a second side opposite the first side, an image plane positioned at a distance from the lens stack on the first side of the lens stack, and a scrim layer positioned on the second side of the lens stack. The lens stack may include a pair of identical lenses stacked facing each other. The lens stack and scrim layer may create a perceived image at the distance away from the lens stack on the second side of the lens stack.

Optionally, the system includes a neutral density filter positioned between the scrim layer and the lens stack.

Optionally, the distance is equal to a size of the lens stack.

Optionally, the image plane is defined by a liquid-crystal display or a light-emitting diode display.

Optionally, the system includes a bounce mirror between the image plane and the lens stack to fold an optical path from the image plane to the lens stack, wherein the optical path defines the distance.

Optionally, each lens of the pair of identical lenses is a Fresnel lens.

A system may include an image plane, a scrim layer, and a lens stack positioned between the image plane and the scrim layer. The lens stack may be positioned at a first distance from the image plane to create a perceived image at a second distance away from the lens stack. The first and second distances may be equal. The image source may be spaced away from the lens stack and on a first side of the lens stack. The scrim layer may be positioned on a second side of the lens stack. The lens stack may include a pair of lenses (e.g., identical Fresnel lenses) stacked facing each other. A bounce mirror positioned between the image plane and the lens stack may fold an optical path from the image plane to the lens stack.

In addition to the exemplary aspects and embodiments described above, further aspects and embodiments will become apparent by reference to the drawings and by study of the following description.

### BRIEF DESCRIPTION OF THE DRAWINGS

FIG. 1 illustrates a perspective view of an example system for creating holograms.
FIG. 2 illustrates a top elevation view of the system of FIG. 1.
FIG. 3 illustrates a front elevation view of the system of FIG. 1, and showing a guest point-of-view (POV).
FIG. 4 illustrates an example attraction implementing the system of FIG. 1.
FIG. 5 illustrates another example system for creating holograms.

### DETAILED DESCRIPTION

In the entertainment industry, a large number of characters have been created that exist purely on screen (e.g., in animation, in movies, in video games, etc.). When creating rides and attractions based on such characters, it may be desired to bring the characters into the real world. In one example, it may be desired to place an animated character proximate a ride path, such as in front of a ride vehicle on the ride path or in other immersive environments.

In examples, a system optically places a 2D or 3D character or a video of a character (e.g., a 2D or 3D holographic character or hologram) in the real world environment, such as part of an immersive experience. For example, a 3D hologram may be generated at any position in or along the ride path (e.g., in front of the ride vehicle, floating at a desired position, etc.) to create an immersive ride environment or other effect. By creating a 2D or 3D character through optics, the character is created without any need for a physical character, e.g., no need to fly, move, or position a physical element into an environment.

Examples described herein make an image (e.g., a 2D or 3D hologram) optically and clearly appear at a desired position, such as a desired distance away from (e.g., a few to many feet in front of) a wall. The technology, infrastructure or systems used to create the hologram may be hidden from view, such as behind a scrim or other barrier and out of sight. Depending on characteristics of the system, the hologram can be seen not only in dim environments, but also in bright environments.

In examples, a display matched with high resolution lenses and a sheer printed scrim or other optical barrier placed in front allows an image or video image of a character to float a distance away from a wall or object, having the appearance of a hologram to a viewer positioned in front of the assembly. The system may be adjusted to change the float distance as desired. The display (e.g., the light produced by the display) may be adjusted to change characteristics of the hologram. For example, the light can be adjusted to make the hologram appear opaque (e.g., fully opaque), move the hologram, change the colors, etc. The system can be scalable, such as based on size and/or application. For example, the system may be designed to work in small installations or applications (e.g., a 1 foot scale) or large installations or applications (e.g., 8 foot tall wall applications).

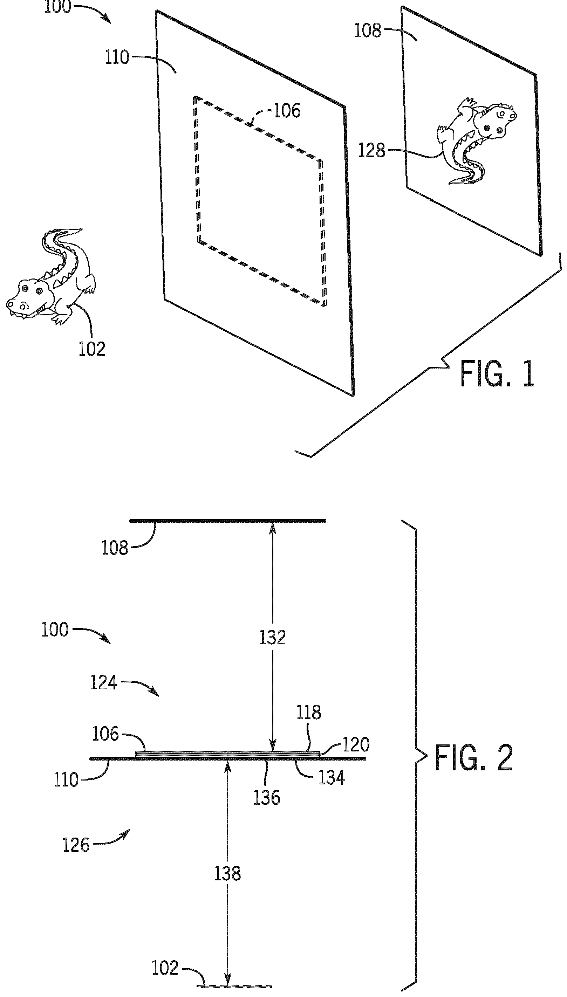

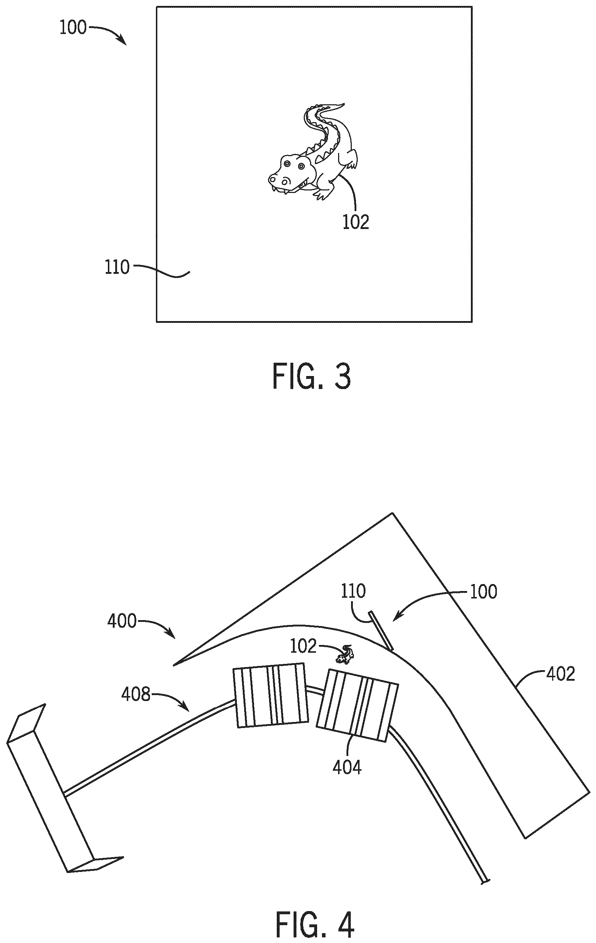

Along these lines, FIGS. 1-3 illustrate various views of an example system 100 for creating holograms. FIG. 1 illustrates a perspective view of the system 100. FIG. 2 illustrates a top elevation view of the system 100. FIG. 3 illustrates a front elevation view of the system 100, and showing a guest or viewer point-of-view (POV). The system 100 may be configured to create a perceived image 102 (e.g., a hologram) in 3D space (hereinafter "image" for sake of convenience without intent to limit and is meant to encompass both 2D and 3D representations of a character, scene, or object). The image 102 created by the system 100 may represent physical objects, thematic elements, or a desired character (e.g., from animation, film, television shows, video games, etc.). The image 102 may be perceived at any position in 3D space. For example, the image 102 may appear to float (i.e., the image is a perceived floating image or to raise above a particular surface or area) in that the image 102 appears spaced away from a wall or floor (e.g., floating in air, positioned away from a screen, etc.). Depending on the application, the image 102 may be 2D or 3D. In this manner, 2D or 3D characters or objects may be created in space, such as within a ride or attraction for an immersive environment, but without requiring the actual object to be positioned physically in the space location. In examples, the image 102 may be considered a hologram.

The system 100 may include a lens stack 106, an image plane 108, and a scrim layer 110. The lens stack 106 may include multiple lens, such as a pair of lenses, arranged or stacked together. For example, the lens stack 106 may include a first lens 118 and a second lens 120. Each lens (e.g., of the pair of lenses) may be identical lenses. For instance, each lens may be a Fresnel lens (e.g., a flat Fresnel lens, a plano-convex Fresnel lens, a spot Fresnel lens, a spherical Fresnel lens, solar cooking Fresnel lens, photovoltaic Fresnel lens, etc.) of an identical or near-identical size and configuration (e.g., same focal length, resolution, size, etc.). The Fresnel lens may be configured to concentrate light, focusing rays of light that would normally scatter to a focal plane or imaging point (e.g., as defined by a focal length). For example, the Fresnel lens may include specifically-designed textures (e.g., ridges and grooves) that gather, direct, or otherwise concentrate scattered light to the focal plane or imaging point. In examples implementing a plano-convex Fresnel lens (or other Fresnel lens), the light may be focused to a single point, which may shorten the distance needed between the image plane 108 and the lens stack 106, such as for compactness of the system 100, to package the image source closer to the lens stack 106, etc.. In examples, each of the first lens 118 and the second lens may include a flat or glossy side and an opposite side having ridges and grooves (or other textures). In such examples, the first lens 118 and second lens may be stacked facing each other, such as stacked with their textures facing each other (e.g., texture to texture, ridge peak to ridge peak) with the flat/glossy sides facing out.

The lenses may be held in alignment. For instance, the first lens 118 and the second lens may be held such that their centers align (e.g., to align the ridges and grooves of the first and second lenses 118, 120). Depending on the application, the first and second lenses 118, 120 may or may not be coupled together to maintain the spacing and alignment therebetween. Along these lines, the first and second lenses 118, 120 may be held in alignment using various methods, including mechanical fasteners, adhesive, framed together, separately secured, etc. In examples, an adhesive may be placed between the pair of lenses. In such examples, the adhesive may have the same infraction index as air (or another index as desired) and fill all or substantially all the gaps between the first and second lenses 118, 120.

Referring to FIG. 2, the lens stack 106 may include a first side 124 and a second side 126 opposite the first side 124. The image plane 108 may be positioned on the first side 124 of the lens stack 106, and the scrim layer 110 may be positioned on the second side 126 of the lens stack 106, such as in a manner described below.

The image plane 108 may be defined by an image source, such as an image generator, a display, a monitor, a projector, etc. For example, the image source may be a liquid-crystal display (LCD) or a light-emitting diode (LED) display (e.g., an organic LED, an LED panel, etc.) that defines the image plane 108. The image plane 108 may be defined by a high contrast imaging surface (e.g., of the image source). In examples, the image plane 108 may be defined by a low brightness or dim display or displays (e.g., 500 nits, less than 500 nits), such as to generate the image 102 with a desired effect (e.g., ghostly or atmospheric floating video effects with transparency). Alternatively, the image plane 108 may be defined by a high brightness display or displays (e.g., greater than 1500 nits, up to 4000 nits, greater than 4000 nits), such as to generate the image 102 with a different effect (e.g., opaque such as fully opaque). The high brightness display or displays may also allow the image 102 to be generated in day light or high light environments (i.e., the disclosure is not limited to dimly lit or light controlled environments). In examples, the display(s) can have high black levels for high contrast. In examples where the image source is a projector, the projector may project on an image surface (i.e., on the image plane 108), whether by rear projection or front projection.

Referring to FIG. 1, the image source may create a generated image 128 on the image plane 108. As shown, the generated image 128 may be upside down to account for the lens stack 106 flipping the image. For example, the generated image 128 may be flipped through the lens stack 106 (e.g., as light from the image source, such as the generated image 128, first passes through the first lens and then through the second lens) and projected as perceived image. The generated image 128 may be imagery (e.g., images, video) created by the image source at the image plane 108 (e.g., from media content). In some examples, the generated image 128 may be created live. For instance, a live actor, puppet, or animatronic may be illuminated. In some examples, one or more physical objects may be illuminated to create the generated image 128.

Referring to FIGS. 1-2, the image plane 108 or image source may be spaced away, or positioned at a distance, from the lens stack 106, such as on the first side 124 of the lens stack 106. For example, the image plane 108 may be positioned at a first distance 132 from the lens stack 106. In examples, the first distance 132 is equal to or about the size of the lens stack 106. For example, if the lens stack 106 (or an individual lens of the lens stack 106) has a size of 1 meter x 1 meter, the first distance 132 may be 1 meter or about 1 meter.

The scrim layer 110 (which may be referred to simply as a scrim) may be positioned on the second side 126 of the lens stack 106. For example, the scrim layer 110 may be positioned proximate the lens stack 106, such as immediately adjacent the lens stack 106, at the lens stack 106, touching the lens stack 106, etc. The scrim layer 110 does not have to touch the lenses, but such examples may provide more depth to the image 102. The scrim layer 110 may be a flexible material, such as cloth or fabric material with an open weave to allow some light transmitted therethrough (e.g., to diffuse and/or reduce the intensity of light). In examples, the scrim layer 110 may be formed of chiffon or another sheer fabric.

The scrim layer 110 may be used to conceal the lens stack 106 and image plane 108. For example, the scrim layer 110 may be formed of a sheer or sheer-like material that allows back light to shine through (e.g., from the lens stack 106) but provides an opaqueness level when front lit (e.g., to hide the lens stack 106 and image plane 108 behind the scrim layer 110). For instance, when lit from the front, the scrim layer 110 may appear solid (e.g., as a solid piece of fabric), but when lit from the rear, the scrim layer 110 may appear semi-transparent. In such examples, a front light (not shown) may be provided to rake or graze the front surface of the scrim layer 110. The front lighting may keep the front of the scrim layer 110 (e.g., the texture and presence of the scrim layer 110) visible, helping to generate the image 102, such as helping the image 102 appear 3D. In examples, the front lighting is no more than half the brightness of the image source behind the scrim layer 110. For example, if the image source has a brightness level of 2000 nits, the front light measured at the scrim layer 110 must be 1000 nits or less.

The scrim layer 110 may be flat or non-flat, such as including texture, waves or curvature when draped in front of the lens stack 106. In examples, the scrim layer 110 may include a design or pattern, such as to conceal or blend the scrim layer 110 with its surroundings. For example, the scrim layer 110 may be patterned, designed, or colored to match or substantially match surrounding walls or ride sets within a ride environment to further conceal or hide operation of the system 100 from the ride vehicle or rider view. In examples, the scrim layer 110 may define a wall or walls of the ride set itself, the scrim layer 110 appearing as a regular wall to the rider or guest (e.g., with nothing out of the ordinary). The system 100 may be agnostic to the size of the scrim layer 110, so long as the scrim layer 110 conceals the lens stack 106 and image plane 108 from view. In examples, the design or pattern of the scrim layer 110 may attract the eye but still hide the lens stack 106 and image plane 108. In examples, the shape of the scrim layer 110 (e.g., wavy or curved as draped) may help with the obfuscation. Depending on the application, the scrim layer 110 may include a digital print or be hand painted.

In examples, the system 100 may include an optional filter layer 134 between the lens stack 106 and the scrim layer 110. The filter layer 134 may adjust or alter (e.g., darken, modify) the light coming from the lens stack 106. In examples, the filter layer 134 may be a neutral density (ND) filter or layer to reduce the amount of light passing to the scrim layer 110. For instance, the ND filter may block between about 20% to about 80% of light (e.g., about 60% of light, a 0.6 filter, etc.). In examples, the filter layer 134 may add depth, contrast, and/or otherwise enhance the image quality of the image 102, such as to provide or enhance a 3D effect.

In examples, the system 100 may include an optional vignette or mask 136 (hereinafter "mask" for sake of convenience without intent to limit to any particular structure or feature). The mask 136 may be positioned between the filter layer 134 and the scrim layer 110. The mask 136 may be a clear substrate (e.g., Plexiglas). The mask 136 may have a printed or painted edge to hide the edges of the lens stack 106, such as a black printed or painted edge to hide the square hard edges of the lens stack 106 in front. Additionally, or alternatively, the mask 136 may provide an artistic effect or intent. For example, the mask 136 may help create or tailor the image 102, such as covering or altering select portions of the image 128 or adding one or more elements to the image 102. The mask 136 may be a separate layer or the mask 136 may be defined at least partially by the filter layer 134.

The lens stack 106, scrim layer 110, optional filter layer 134, and optional mask XX may create the image 102. For example, lens stack 106 may project an image from the image plane 108 forward of the lens stack 106, such as at the focal distance of the lens stack 106. The scrim layer 110 provides a plane or surface for a viewer to focus on and gives a perception of distance from the image 102. For example, the scrim layer 110 may provide the notion that the image 102 is floating in front of the scrim layer 110, such as the image 102 appearing out of nowhere in or in front of an area of a wall defined by the scrim layer 110.

In some examples, additional elements may be provided to "ground" the image 102. For example, a platform (not shown) may be placed below the image 102 to help visualize the projection. In examples, the platform may include a diffusively reflective surface. In such examples, a shadow or reflection of the image 102 may be seen in the diffusively reflective surface. Other elements to "ground" the image may include physical props and/or a person standing next to the image 102.

Visualization of the image 102 may be defined by the size or configuration of the lens stack 106. For example, the lens stack 106 may define a field of view (FOV) at which the image 102 can be viewed by a viewer (e.g., from a guest POV). In examples, the bigger the lens stack 106, the bigger or wider the FOV, and vice-versa. A larger FOV may allow viewing of the image 102 from a wide range of angles and distances, such as to allow the image 102 to be viewed by multiple guests at different positions. Without a large FOV, the image 102 may appear strange or distorted when not viewed from a particular angle or a limited range of angles.

In examples, the image 102 is created on the second side 126 of the lens stack 106, such as at a second distance 138 away from the lens stack 106. The second distance 138 may be dependent upon specifications of the lens stack 106 and the distance of the image plane 108 or surface from the lens stack 106. For example, the second distance 138 may be equal to the first distance 132. In this manner, the image plane 108 may be at a distance away from the lens stack 106 on the first side 124, with the image 102 created at the same distance away from the lens stack 106 but on the second side 126. The second distance 138 may be equal to or about the size of the lens stack 106. For example, if the lens stack 106 (or an individual lens of the lens stack 106) has a size of 1 meter x 1 meter, the second distance 138 may be 1 meter or about 1 meter.

FIG. 4 illustrates an example attraction 400 implementing the system 100. The attraction 400 may include a show set 402 and one or more ride vehicles 404, such as positioned along a track 408. In such examples, the system 100 may be used to project the image 102 along the track 408, such as in front of or near the ride vehicles 404. The scrim layer 110 may be integrated into the show set 402, such as defining a surface of the show set 402, positioned within a view corridor of the show set 402, or the like.

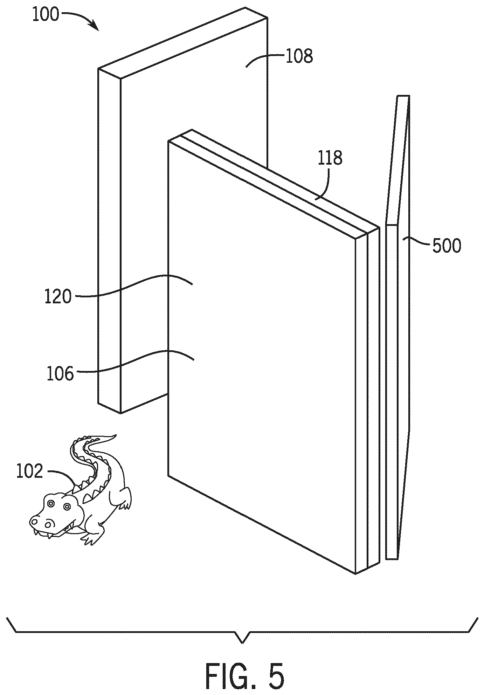

FIG. 5 illustrates another implementation of system 100 for creating holograms. In the example of FIG. 5, the system 100 includes a bounce mirror 500 between the image plane 108 or source and the lens stack 106 to fold an optical path from the image plane 108 to the lens stack 106. In such examples, the optical path may define the distance (e.g., the first distance 132) of the image plane 108 from the lens stack 106. The bounce mirror 500 may be oriented based on the positional arrangement of the image source and the lens stack 106. For example, the bounce mirror 500 may be positioned at 45-degrees to the image source and the lens stack 106, although other configurations are contemplated to package the system 100 in different footprints (e.g., based on different configurations of attraction 400). Although not shown, the implementation illustrated in FIG. 5 may still use scrim layer 110 and filter layer 134 in front of the lens stack 106, such as to hide the lens stack 106 from being seen and enhance the image quality of the image 102.

The system 100 may be used to implement a method or process of creating a perceived image or hologram in space, such as in a ride or attraction environment. For example, an image (e.g., generated image 128) may be created at the image plane 108, such as by an image source (e.g., LCD, LED display, projector, etc.). The image plane 108 may be positioned at a distance from the lens stack 106, such as at the focal length of the lens stack 106.

Light from the generated image 128 may pass to the lens stack 106. For example, light from the generated image 128 may first pass to the first lens 118 and then to the second lens 120 of the lens stack 106. After passing through the lens stack 106, the light may pass through the scrim layer 110. The scrim layer 110 may modify one or more characteristics of the light, such as diffusing and/or reducing the intensity of the light.

After passing through the scrim layer 110, the light projected through the lens stack 106 may be gathered to create the image 102, such as at an imaging plane at a distance from the lens stack 106 (e.g., at the focal length of the lens stack 106). The image 102 may be perceived at any position in 3D space, such as within a ride environment, in front of ride vehicle 404, on the track 408, etc. (e.g., as part of an immersive experience).

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

Aspects and features of the present disclosure are set out in the following numbered clauses.
1. A system comprising:
   an image plane having a generated image;
   a scrim layer; and
   a lens stack positioned between the image plane and the scrim layer, the lens stack positioned at a first distance from the image plane and configured to create, at a second distance away from the lens stack, a perceived image of the generated image.
2. The system of clause 1, wherein the lens stack comprises a pair of Fresnel lenses stacked facing each other.
3. The system of clause 2, wherein each Fresnel lens of the pair of Fresnel lenses is a plano-convex Fresnel lens.
4. The system of clause 2, wherein each Fresnel lens of the pair of Fresnel lenses is a spot Fresnel lens.
5. The system of clause 1, further comprising a neutral density filter positioned between the scrim layer and the lens stack.
6. The system of clause 1, wherein the scrim layer comprises a sheer material.
7. The system of clause 1, wherein the second distance is equal to the first distance.
8. A system comprising:
   a lens stack comprising a first side and a second side opposite the first side;
   an image source spaced away from the lens stack and on the first side of the lens stack and configured to generate an image; and
   a scrim layer positioned on the second side of the lens stack,
   wherein the lens stack and scrim layer create a perceived image based on the image and on the second side of the lens stack.
9. The system of clause 8, further comprising a bounce mirror between the image source and the lens stack to fold an optical path from the image source to the lens stack.
10. The system of clause 8, wherein the lens stack comprises a first Fresnel lens and a second Fresnel lens.
11. The system of clause 10, wherein the first and second lenses are identical lenses stacked facing each other.
12. The system of clause 8, wherein the image source is a liquid-crystal display or a light-emitting diode display.
13. The system of clause 8, wherein the image source defines an image plane at a distance away from the lens stack on the first side, and wherein the perceived image is created at the distance away from the lens stack on the second side.
14. The system of clause 8, wherein the system is configured to create the perceived image in a bright environment.
15. A system comprising:
   a lens stack comprising a first side and a second side opposite the first side, the lens stack comprising a pair of identical lenses stacked facing each other;
   an image plane positioned at a distance from the lens stack on the first side of the lens stack; and
   a scrim layer positioned on the second side of the lens stack,
   wherein the lens stack and scrim layer create a perceived image at the distance away from the lens stack on the second side of the lens stack.
16. The system of clause 15, further comprising a neutral density filter positioned between the scrim layer and the lens stack.
17. The system of clause 15, wherein the distance is equal to a size of the lens stack.
18. The system of clause 15, wherein the image plane is defined by a liquid-crystal display or a light-emitting diode display.
19. The system of clause 15, further comprising a bounce mirror between the image plane and the lens stack to fold an optical path from the image plane to the lens stack, wherein the optical path defines the distance.
20. The system of clause 15, wherein each lens of the pair of identical lenses is a Fresnel lens.

## Claims

1. A system comprising:
an image plane having a generated image;
a scrim layer; and
a lens stack positioned between the image plane and the scrim layer, the lens stack positioned at a first distance from the image plane and configured to create, at a second distance away from the lens stack, a perceived image of the generated image.

2. The system of claim 1, wherein the second distance is equal to the first distance.

3. A system comprising:
a lens stack comprising a first side and a second side opposite the first side;
an image source spaced away from the lens stack and on the first side of the lens stack and configured to generate an image; and
a scrim layer positioned on the second side of the lens stack,
wherein the lens stack and scrim layer are configured to create a perceived image based on the image and on the second side of the lens stack.

4. The system of claim 3, further comprising a bounce mirror between the image source and the lens stack to fold an optical path from the image source to the lens stack.

5. The system of any of claims 3 to 4, wherein the image source is a liquid-crystal display or a light-emitting diode display.

6. The system of any of claims 3 to 5, wherein the image source defines an image plane at a distance away from the lens stack on the first side, and wherein the perceived image is created at the distance away from the lens stack on the second side.

7. The system of any preceding claim, wherein the lens stack comprises a pair of lenses, optionally wherein at least one of:
the pair of lenses are identical; or
the pair of lenses are stacked facing each other.

8. A system comprising:
a lens stack comprising a first side and a second side opposite the first side, the lens stack comprising a pair of identical lenses stacked facing each other;
an image plane positioned at a distance from the lens stack on the first side of the lens stack; and
a scrim layer positioned on the second side of the lens stack,
wherein the lens stack and scrim layer are configured to create a perceived image at the distance away from the lens stack on the second side of the lens stack.

9. The system of claim 8, wherein the distance is equal to a size of the lens stack.

10. The system of any of claims 8 to 9, further comprising a bounce mirror between the image plane and the lens stack to fold an optical path from the image plane to the lens stack, wherein the optical path defines the distance.

11. The system of any of claims 7 to 10, wherein each lens of the pair of lenses is a Fresnel lens, optionally wherein each lens of the pair of lenses is a plano-convex Fresnel lens or a spot Fresnel lens.

12. The system of any preceding claim, wherein the scrim layer comprises a sheer material.

13. The system of any preceding claim, wherein the system is configured to create the perceived image in a bright environment.

14. The system of any preceding claim, further comprising a neutral density filter positioned between the scrim layer and the lens stack.

15. The system of any preceding claim when dependent on any of claims 1 or 8, wherein the image plane is defined by a liquid-crystal display or a light-emitting diode display.
